# EUROPEAN PATENT APPLICATION

(11) **EP 2 397 616 A2**
(43) Date of publication of application: **21.12.2011**
(21) Application number: 11168930.3
(22) Date of filing: 07.06.2011
(51) Int. Cl.: E04B 1/80, C04B 28/02, C04B 30/02

(54) **Composite thermal insulation material**

(30) Priority: 15.06.2010 DE 202010009060 U
(71) Applicant: Microtherm N.v., 9100 Sint Niklaas (BE)
(72) Inventor: Heytens, Steven, 8540 Deerlijk (BE); Van Gucht, Baudewijn, 2880 Bornem (BE)
(74) Representative: Jackson, Derek Charles

(57) **Abstract**

A composite thermal insulating material comprises a layer (3, 9) of thermal insulating material between two layers (5, 13) of material selected from cellular glass and cellular concrete material.

## Description

This invention relates to a composite thermal insulation material which may be used, for example in building applications.

Cellular glass insulation is a lightweight, rigid material composed of a large number of small, sealed glass cells. Cellular glass has the advantages of being water impermeable and resistant to moisture, it is incombustible, resistant to corrosion, it is dimensionally stable, i.e., rigid, and has high compressive strength. Cellular glass insulation therefore has many uses including the insulation of flat roofs, standing seam roofs, green roofs, car park decks, interior, exterior and cavity walls, and under and over concrete and hardcore floors. However, it has the disadvantage of a relatively high thermal conductivity at about 0.038 to about 0.05 W/mK. Cellular concrete is a similar, lightweight rigid material composed of a large number of small, sealed cells.

Many relatively low thermal conductivity insulation materials are weak and unsuitable where rigidity and strength are required. Such insulation materials include, but are not limited to, microporous thermal insulation materials, such as those incorporating pyrogenic silica, and evacuated insulation panels, including those containing microporous thermal insulation. It is therefore desirable to combine low thermal conductivity materials in composite thermal insulation materials which overcome the lack of rigidity and strength.

It is known from EP-A-2 119 840 to encase a thermal insulating core within sheets of glass which are sealed together to encase the core within a chamber which is then evacuated. Glass sheets, though, have the disadvantage that they do not have significant strength unless manufactured using special processes, such as lamination, which increase the cost of the casing. Moreover, the thermal conductivity of glass sheets is relatively high, for example greater than 1 W/mK.

It is also known from DE-A-10 2008 034 842 to provide a composite thermal insulating material in which a thermally insulating core is encased within a glass envelope which is composed of glass sheets which are sealed together to form a chamber containing the core, and the chamber is evacuated. Clearly, the composite thermal insulating panel of DE-A-10 2008 034 842 suffers the same disadvantages as that of EP-A-2 119 840.

It is therefore an object of the present invention to provide a composite thermal insulating material which overcomes, or at least ameliorates, the abovementioned disadvantages.

According to the present invention there is provided a composite thermal insulating material comprising a layer of thermal insulating material between two layers of material selected from a cellular glass material and a cellular concrete material.

The two layers of cellular material may form a casing around a core formed by the layer of thermal insulating material.

The casing may be formed of a number of components secured together to define a chamber for the core. The casing may be formed of two substantially identical components.

The casing components may be secured together with an adhesive. The adhesive may be selected from a bituminous adhesive, an epoxy adhesive, a butyl rubber adhesive, a contact adhesive, a polyurethane adhesive, an acrylic adhesive, a hot melt adhesive and a silyl modified adhesive.

Alternatively or additionally, the casing components may be secured together by mechanical means.

Alternatively, the layer of thermal insulating material may be secured between the layers of cellular material by means of an adhesive. The adhesive may be selected from a bituminous adhesive, an epoxy adhesive, a butyl rubber adhesive, a contact adhesive, a polyurethane adhesive, an acrylic adhesive, a hot melt adhesive and a silyl modified adhesive. Irrespective of whether or not an adhesive is present between the layers, the edges of the layers may be provided with a protective layer, such as of self-adhesive tape. The protective layer may extend onto major surfaces of the sheets of cellular material.

The thermal insulation material may be selected from inorganic material, organic foam material, polyurethane material, polystyrene material, glass fibre material, aerogel material and microporous material.

The thermal insulation material may comprise a microporous material containing, in percent by weight, amorphous silica 68-100, preferably 84-94, silicon carbide up to 20, preferably 3-8, and polymer filaments up to 12, preferably 3-8.

Alternatively, the thermal insulation material may comprise a microporous material containing, in percent by weight, amorphous silica 50-90, preferably 55-65, opacifier 10-50, preferably 33-43, filaments selected from glass, silica, polymer and mixtures thereof up to 12, preferably 1-6, and aluminium oxide up to 25, preferably up to 5.

The opacifier may be selected from titanium dioxide, zircon, iron oxide, ilmenite, carbon black and silicon carbide and mixtures thereof.

The amorphous silica may be selected from precipitated silica, volatilised silica and pyrogenic silica and mixtures thereof.

The layer of thermal insulation material may comprise an evacuated panel of thermal insulation material. A layer of protective material, such as a foam plastics material, especially extruded polystyrene, may be provided between the layer of thermal insulation material and the layers of cellular material.

Alternatively, the layer of thermal insulation material may comprise a non-evacuated panel of thermal insulation material, such as a compacted microporous thermal insulation material. The panel of thermal insulation material may be arranged within an evacuated chamber between the layers of cellular material.

For a better understanding of the present invention and to show more clearly how it may be carried into effect reference will now be made, by way of example, to the accompanying drawings, in which:

Figure 1 shows one embodiment of a composite thermal insulating material according to the present invention;

Figure 2 shows a modification of the composite thermal insulating material of Figure 1;

Figure 3 shows another embodiment of a composite thermal insulating material according to the present invention;

Figure 4 shows a further embodiment of a composite thermal insulating material according to the present invention;

Figure 5 shows a modification of the composite thermal insulating material shown in Figure 4; and

Figure 6 shows a further modification of the composite thermal insulating material shown in Figure 5.

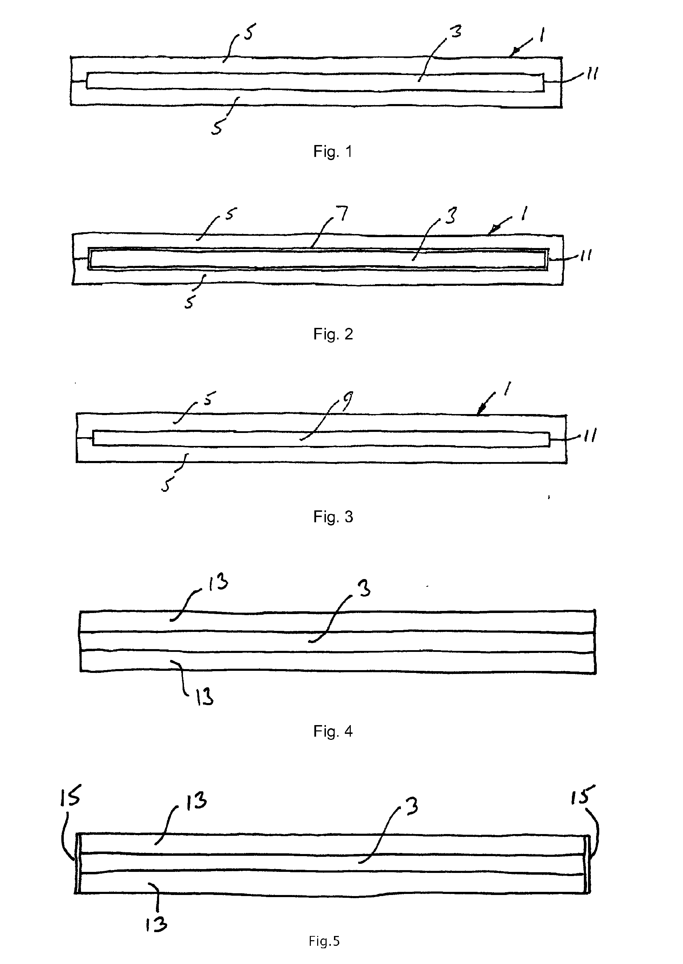

The composite thermal insulating material shown in Figure 1 comprises a casing 1 of cellular glass defining within the casing a chamber containing an evacuated panel 3 of thermal insulation material (also known as a vacuum insulation panel or VIP). The casing is conveniently formed of two identical components 5, each of which is formed with a recess, the two recesses combining to form the chamber. The two casing components are then secured together with a suitable adhesive 11 to seal the panel 3 within the casing 1 of cellular glass. It should be noted that cellular concrete can be used as an alternative to cellular glass.

Alternatively, the components of cellular glass forming the casing need not be identical and the recess forming the chamber that receives the panel 3 may be formed entirely in one of the casing components. As a further alternative, the casing 1 may be made from a number of different components which are secured together to form the chamber that receives the panel 3.

The cellular glass is available, for example, from Pittsburgh Corning Europe under the Registered Trade Mark FOAMGLAS or from Cell-U-Foam Corporation under the trade name Hi-Therm. The evacuated insulation panel is available from Microtherm Europe under the Registered Trade Mark SLIMVAC. The adhesive may be a bituminous adhesive.

The composite thermal insulating material of Figure 2 is similar to that of Figure 1, the difference being that a layer 7 of a protective material, such as a foam plastics material, especially extruded polystyrene foam, is provided between the panel 3 and the casing 1 to protect the surface of the panel 3 from the relatively rough surface of the cellular glass.

The composite thermal insulating material shown in Figure 3 is similar to that shown in Figure 1 and comprises a casing 1 of cellular glass defining within the casing a chamber containing a panel 9 (not evacuated) of thermal insulation material. The thermal insulation may, for example, comprise a compacted microporous thermal insulation containing, in percent by weight, amorphous silica 68 to 100 (preferably 84 to 94), silicon carbide up to 20 (preferably 3 to 8), and polymer filaments up to 12 (preferably 3 to 8).

If desired, the chamber containing the thermal insulation material may be evacuated during the manufacturing process.

Clearly other forms of evacuated and non-evacuated thermal insulation materials may be employed. These may include, for example, inorganic materials, such as perlite, polyurethane, polystyrene, other organic foam materials, glass fibres, and aerogel-like materials. Alternative microporous materials may also be used such as a material having the composition, in percent by weight, amorphous (such as precipitated, volatilised, pyrogenic and mixtures thereof) silica 50 to 90 (preferably 55 to 65), opacifier 10 to 50 (preferably 33 to 43), filaments selected from glass, silica and polymer and mixtures thereof up to 12 (preferably 1 to 6) and aluminium oxide up to 25 (preferably up to 5).

The opacifier may be selected, for example, from titanium dioxide, zircon, iron oxide, ilmenite, carbon black and silicon carbide and mixtures thereof.

Other forms of adhesive may also be employed. These may include, for example, epoxy adhesives, butyl rubber, contact adhesives, polyurethane adhesives, acrylic adhesives, hot melt adhesives and silyl modified adhesives.

Mechanical fastenings may be used as an alternative or in addition to an adhesive.

The composite thermal insulation materials of the present invention may be used, for example, in buildings, such as in facade and/or roof elements and in sandwich structures for cool houses and cryogenic applications.

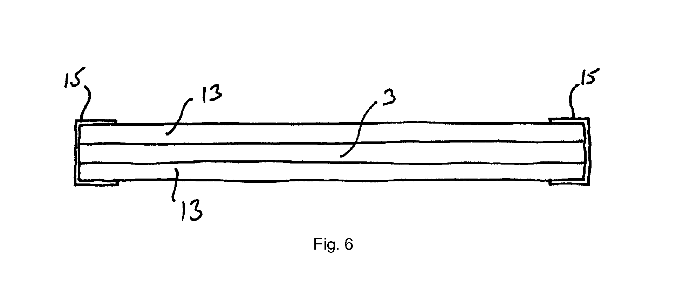

The composite thermal insulating material of Figure 4 is similar to that of Figure 1 and comprises a sandwich construction in which the casing of cellular glass comprises two sheets 13 of cellular glass enclosing a panel 3 (evacuated or non-evacuated) of thermal insulation material therebetween. The three layers are secured together with a suitable adhesive, such as a bituminous adhesive, an epoxy adhesive, a butyl rubber adhesive, a contact adhesive, a polyurethane adhesive, an acrylic adhesive, a hot melt adhesive, or a silyl modified adhesive. As shown in Figure 5, the edges of the three layers may be covered with a protective layer 15, for example of self-adhesive tape, so as to form a chamber containing the panel. In this case, the adhesive between the three layers is optional. As shown in Figure 6, the protective layer 15 may extend onto the major surfaces of the outer sheets forming the casing of cellular glass.

The invention is illustrated by the following examples:

Example 1

A composite thermal insulation panel was made by preparing two casing parts of FOAMGLAS cellular glass material from Pittsburgh Corning Europe, each casing part having external dimensions of 739 mm by 490 mm by 39 mm and a density of 160 kg/m³. Each casing part was formed with a recess having dimensions of 703 mm by 452 mm and a depth of 10 mm. An evacuated panel of SLIMVAC from Microtherm Europe having dimensions of 700 mm by 450 mm by 18 mm was placed in the chamber formed by the two recesses and the two casing parts were secured together with a bituminous adhesive to provide 30 mm of cellular glass material on each side of the panel.

The original cellular glass material had a thermal conductivity of 0.042 W/mK, while the evacuated panel had a thermal conductivity of less than 0.005 W/mK and the composite thermal insulation panel was tested to determine a thermal conductivity of 0.0167 W/mK at 10 degrees Celsius, giving a substantial improvement over the thermal conductivity of the original cellular glass.

Example 2

A composite thermal insulation panel was made by preparing two casing parts of FOAMGLAS cellular glass material as in Example 1. A panel of compacted microporous thermal insulation material having the composition, in percent by weight, amorphous silica 90, silicon carbide 5 and PET filaments 5 was placed in the chamber formed by the two recesses and the two casing parts were secured together with a bituminous adhesive to provide 30 mm of cellular glass material on each side of the panel as in Example 1. The resulting composite thermal insulation material was not evacuated.

The composite thermal insulation panel was found to have a thermal conductivity of 0.0347 W/mK at 10 degrees Celsius, again giving a significant improvement over the thermal conductivity of the original cellular glass. It is believed that the thermal conductivity of such a composite thermal insulation panel would fall to substantially that of Example 1 if the chamber is evacuated.

## Claims

1. A composite thermal insulating material comprising a layer (3, 9) of thermal insulating material between two layers (5, 13) of material selected from a cellular glass material and a cellular concrete material.

2. A composite material according to claim 1, **characterised in that** the two layers (5, 13) of cellular material form a casing (1) around a core (3, 9) formed by the layer of thermal insulating material.

3. A composite material as claimed in claim 2, **characterised in that** the casing (1) is formed of a number of components (5, 13) secured together to define a chamber for the core (3, 9).

4. A composite material according to claim 3, **characterised in that** the casing (1) is formed of two substantially identical components (5).

5. A composite material according to claim 2, 3 or 4, **characterised in that** the casing components (5) are secured together with an adhesive (11).

6. A composite material according to any of claims 2 to 5, **characterised in that** the casing components are secured together by mechanical means.

7. A composite material according to claim 1, **characterised in that** the layer (9) of thermal insulation material is secured between the layers (13) of cellular material by means of an adhesive.

8. A composite material as claimed in claim 1 or 7, **characterised in that** the edges of the layers (3, 13) are provided with a protective layer (15).

9. A composite material according to claim 8, **characterised in that** the protective layer (15) extends onto major surfaces of the sheets (13) of cellular material.

10. A composite material according to any one of claims 1 to 9, **characterised in that** the thermal insulation material is selected from inorganic material, organic foam material, polyurethane material, polystyrene material, glass fibre material, aerogel material and microporous material.

11. A composite material according to any one of claims 1 to 10, **characterised in that** the layer of thermal insulation material comprises an evacuated panel (3) of thermal insulation material.

12. A composite material according to claim 11, **characterised in that** a layer (7) of protective material is provided between the layer (3, 9) of thermal insulating material and the layers (5, 13) of cellular material.

13. A composite material according to claim 12, **characterised in that** the layer (7) of protective material comprises a foam plastics material.

14. A composite material according to any one of claims 1 to 10, **characterised in that** the layer (3, 9) of thermal insulation material comprises a non-evacuated panel of thermal insulation material.

15. A composite material according to claim 14, **characterised in that** the panel (3, 9) of thermal insulation material is arranged within an evacuated chamber between the layers (5, 13) of cellular material.
